# EUROPEAN PATENT APPLICATION

(11) **EP 3 917 192 A1**
(43) Date of publication of application: **01.12.2021**
(21) Application number: 20744896.0
(22) Date of filing: 16.01.2020
(51) Int. Cl.: H04W 16/14, H04W 16/28, H04W 72/08, H04L 27/26, H04W 48/16

(54) **USER TERMINAL AND WIRELESS COMMUNICATION METHOD**

(30) Priority: 23.01.2019 JP 2019022056
(71) Applicant: NTT DOCOMO, INC., Chiyoda-Ku Tokyo 100-6150 (JP)
(72) Inventor: HARADA, Hiroki, Tokyo 100-6150 (JP)
(74) Representative: Hoffmann Eitle
(86) International application number: PCT/JP2020/001222
(87) International publication number: WO 2020/153212

(57) **Abstract**

To appropriately take QCL assumption related to SSBs into consideration in an NR-U carrier. A user terminal according to an aspect of the present disclosure includes: a receiving section that receives a synchronization signal block (SSB); and a control section that obtains an effective SSB index, based on a demodulation reference signal (DMRS) of a broadcast channel (Physical Broadcast Channel (PBCH)) included in the SSB.

## Description

### Technical Field

The present disclosure relates to a user terminal and a radio communication method in next-generation mobile communication systems.

### Background Art

In Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G))," "5G+ (plus)," "New Radio (NR)," "3GPP Rel. 15 (or later versions)," and so on) are also under study.

For existing LTE systems (for example, Rel. 8 to Rel. 12), specifications have been performed on the assumption that exclusive operation is performed in a frequency band (also referred to as a licensed band, a licensed carrier, a licensed component carrier (licensed CC), or the like) allowed by a communication operator. As the licensed CC, for example, 800 MHz, 1.7 GHz, 2 GHz, and the like are used.

In the existing LTE systems (for example, Rel. 13), in order to extend the frequency band, the use of a frequency band (also referred to as an unlicensed band, an unlicensed carrier, or an unlicensed CC) that is different from the licensed band is supported. As the unlicensed band, for example, a 2.4 GHz band, a 5 GHz band, and the like in which Wi-Fi (registered trademark) and Bluetooth (registered trademark) can be used are assumed.

In Rel. 13, carrier aggregation (CA), whereby the carrier (CC) of the licensed band and the carrier (CC) of the unlicensed band are aggregated, is supported. Communication performed by using the unlicensed band as well as the licensed band as described above is referred to as License-Assisted Access (LAA).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For NR as well, the use of the unlicensed band has been under study. Before transmission of data in the unlicensed band, listening (also referred to as Listen Before Talk (LBT) or the like) is performed.

In NR, a Synchronization Signal (SS)/Physical Broadcast CHannel (PBCH) block (SS block (SSB)) is used. A user terminal (for example, a User Equipment (UE)) may be configured with a higher layer parameter (which may be referred to as, for example, a Radio Resource Control (RRC) parameter "ssb-PositionsInBurst") related to a transmission unit (which may be referred to as an SS burst or an SS burst set, or simply as a burst or the like) of some sets of the SSBs.

However, a scheme in which the UE preferably determines Quasi-Co-Location (QCL) assumption between SSB indices in consideration of an LBT failure in a case where semi-statically transmitted SSBs are reported by using ssb-PositionsInBurst has not been sufficiently studied. A scheme in which the UE preferably determines the QCL assumption between the SSB indices in consideration of an LBT failure when ssb-PositionsInBurst cannot be used has not been sufficiently studied. Unless these are clearly defined, monitoring of a PDCCH cannot be preferably performed, for example, which may result in deterioration of communication throughput.

In the light of the above, the present disclosure has an object to provide a user terminal and a radio communication method that can appropriately take QCL assumption related to SSBs into consideration in an NR-U carrier.

### Solution to Problem

A user terminal according to an aspect of the present disclosure includes: a receiving section that receives a synchronization signal block (SSB); and a control section that obtains an effective SSB index, based on a demodulation reference signal (DMRS) of a broadcast channel (Physical Broadcast Channel (PBCH)) included in the SSB.

### Advantageous Effects of Invention

According to an aspect of the present disclosure, the QCL assumption related to the SSBs can be appropriately taken into consideration in the NR-U carrier.

### Brief Description of Drawings

FIG. 1 is a diagram to show an example of a relationship between a PDCCH monitoring occasion and an SSB for OSI according to Rel-15 NR;
FIG. 2 is a diagram to show an example of a relationship between the PDCCH monitoring occasion for paging and the SSB according to Rel-15 NR;
FIGS. 3A and 3B are each a diagram to show an example of extension of SSB transmission candidate positions;
FIG. 4 is a diagram to show another example of extension of the SSB transmission candidate positions;
FIGS. 5A and 5B are each a diagram to show an example of a problem of QCL assumption of the SSB;
FIG. 6 is a diagram to show an example of the QCL assumption between SSB indices according to an embodiment;
FIG. 7 is a diagram to show another example of the QCL assumption between the SSB indices according to an embodiment;
FIG. 8 is a diagram to show yet another example of the QCL assumption between the SSB indices according to an embodiment;
FIG. 9 is a diagram to show an example of a relationship between the PDCCH monitoring occasion for paging and the SSB according to an embodiment;
FIG. 10 is a diagram to show an example of the QCL assumption between the SSB indices according to an embodiment;
FIG. 11 is a diagram to show another example of the QCL assumption between the SSB indices according to an embodiment.
FIG. 12 is a diagram to show an example of a schematic structure of a radio communication system according to one embodiment;
FIG. 13 is a diagram to show an example of a structure of a base station according to one embodiment;
FIG. 14 is a diagram to show an example of a structure of a user terminal according to one embodiment; and
FIG. 15 is a diagram to show an example of a hardware structure of the base station and the user terminal according to one embodiment.

### Description of Embodiments

### <Unlicensed Band>

In an unlicensed band (for example, a 2.4 GHz band, a 5 GHz band, or a 6 GHz band), for example, it is assumed that a plurality of systems such as a Wi-Fi system and a system (LAA system) for supporting LAA coexist, and thus it is conceivable that collision avoidance and/or interference control of transmission between the plurality of systems is required.

For example, in the Wi-Fi system using the unlicensed band, Carrier Sense Multiple Access (CSMA)/Collision Avoidance (CA) is employed with the aim of collision avoidance and/or interference control. In CSMA/CA, a Distributed access Inter Frame Space (DIFS) is provided for a given time period before transmission, and the transmitting apparatus transmits data after confirmation (carrier sense) of another transmit signal being absent. After data transmission, an ACKnowledgement (ACK) from the receiving apparatus is awaited. When the transmitting apparatus fails to receive the ACK within a given time period, the transmitting apparatus determines that a collision has occurred, and performs retransmission.

In LAA of the existing LTE systems (for example, Rel. 13), the transmitting apparatus for transmitting data performs listening (also referred to as Listen Before Talk (LBT), Clear Channel Assessment (CCA), carrier sense, sensing of a channel, channel access operation, or the like) for confirming whether or not there is transmission of another apparatus (for example, a base station, a user terminal, a Wi-Fi apparatus, and the like) before transmission of data in the unlicensed band.

For example, the transmitting apparatus may be a base station (for example, a gNodeB (gNB)) in the downlink (DL), and a user terminal (for example, a User Equipment (UE)) in the uplink (UL). The receiving apparatus that receives data from the transmitting apparatus may be a UE in the DL and a base station in the UL, for example.

In LAA of the existing LTE systems, the transmitting apparatus starts data transmission after the elapse of a given period (for example, immediately after or a period of back-off) since detection that there is no transmission of another apparatus in LBT (idle state).

An NR system using the unlicensed band may be referred to as an NR-Unlicensed (U) system, an NR LAA system, or the like. Dual connectivity (DC) between the licensed band and the unlicensed band, stand-alone (SA) of the unlicensed band, and the like may be employed in NR-U as well.

A node (for example, the base station or the UE) in NR-U starts transmission after confirming that a channel is available (idle) by means of LBT due to coexistence of another system or another operator.

In NR-U system, when LBT results indicate idle (LBT-idle), the base station or the UE acquires a transmission opportunity (TxOP), and performs transmission. When the LBT results indicate busy (LBT-busy), the base station or the UE does not perform transmission. The time of the transmission opportunity is also referred to as Channel Occupancy Time (COT).

Note that LBT-idle may be interpreted as success in LBT (LBT success). LBT-busy may be interpreted as failure in LBT (LBT failure).

### <SSB>

In NR, a synchronization signal/broadcast channel (Synchronization Signal/Physical Broadcast Channel (SS/PBCH)) block is used. The SS/PBCH block may be a signal block including a primary synchronization signal (PSS), a secondary synchronization signal (SSS), and a broadcast channel (Physical Broadcast Channel (PBCH)) (and a demodulation reference signal (DMRS) for the PBCH). The SS/PBCH block may be referred to as a synchronization signal block (SSB) .

In Rel-15 NR, PDCCH monitoring operation for receiving other system information (OSI) and paging is defined. Note that the OSI may correspond to system information other than minimum system information (Remaining Minimum System Information (RMSI)).

For example, when an ID of a search space for the OSI or paging is zero (in other words, when the UE monitors the PDCCH for the OSI or the paging in search space zero (search space #0)), the monitoring occasion of the PDCCH (PDCCH monitoring occasion) may be the same as the PDCCH monitoring occasion for System Information Block 1 (SIB1). The relationship (mapping) between the PDCCH monitoring occasion and the SSB index may be determined based on §13 of 3GPP TS 38.213. The PDCCH monitoring occasion may be referred to as a PDCCH monitoring period or the like.

When the ID of the search space for the OSI or the paging is not zero and the UE is in an idle/inactive mode (IDLE/INACTIVE mode), the UE may determine the PDCCH monitoring occasion to be monitored for the OSI or the paging, based on a relationship (for example, §7.1 of 3GPP TS 38.304, §5 of TS 38.331, and the like) between an actually transmitted SSB and the PDCCH monitoring occasion.

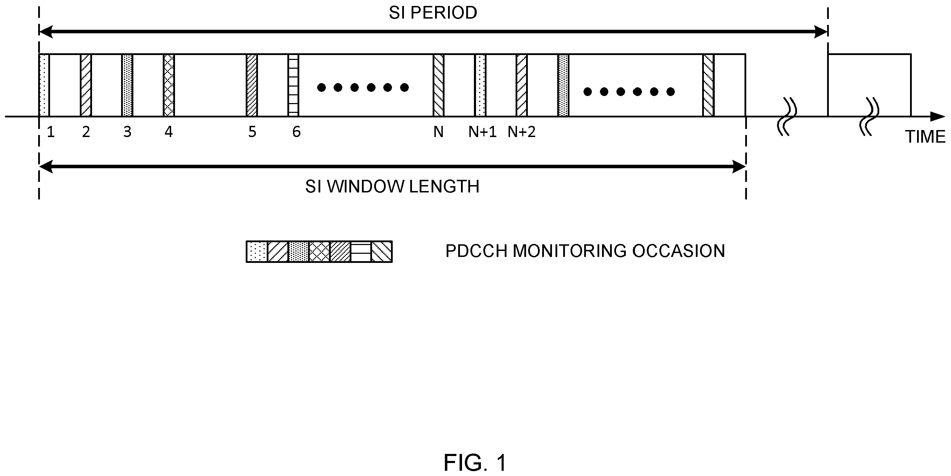

FIG. 1 is a diagram to show an example of a relationship between the PDCCH monitoring occasion and the SSB for the OSI according to Rel-15 NR.

A system information (SI) window length may correspond to the length of a window (period) that can be used for scheduling of the SI, and for example, 5 slots, 10 slots, ..., 1280 slots, and the like may be configured for the UE by using higher layer signaling.

In the present disclosure, the higher layer signaling may be, for example, any one of Radio Resource Control (RRC) signaling, Medium Access Control (MAC) signaling, broadcast information, and the like, or a combination of these.

The MAC signaling may use, for example, a MAC control element (MAC CE), a MAC Protocol Data Unit (PDU), or the like. The broadcast information may be, for example, a master information block (MIB), a system information block (SIB), RMSI, OSI or the like.

System information (SI) periodicity may correspond to periodicity of an SI message of a radio frame unit, and for example, 8 radio frames, 16 radio frames, ..., 512 radio frames, and the like may be configured for the UE by using higher layer signaling.

The UE may be configured with a higher layer parameter (which may be referred to as, for example, a Radio Resource Control (RRC) parameter "ssb-PositionsInBurst") related to a transmission unit of some sets of the SSBs. The transmission unit of the SSB may be referred to as a transmission period of the SSB, an SSB set, an SS burst, an SS burst set, or simply a burst, or the like. The SS burst may mean a set of SSBs included in each given period (for example, a half frame (0.5 radio frames)). The higher layer parameter may be referred to as information (parameter) related to time domain positions of the SSBs transmitted in the SS burst. In the present disclosure, description is given by assuming that the higher layer parameter is ssb-PositionsInBurst, but the term is not limited to this.

Regarding ssb-PositionsInBurst, the size (bit length) may be different according to a frequency used by a serving cell. For example, ssb-PositionsInBurst may be defined as 4 bits for a frequency of 3 GHz or 2.4 GHz or lower, 8 bits for a frequency from 3 GHz or 2.4 GHz to 6 GHz, 64 bits in the other cases, and the like. In other words, the size of ssb-PositionsInBurst may be 4 or 8 bits when a subcarrier spacing (SCS) of the SSB is 15 kHz or 30 kHz, and more than 8 bits when the subcarrier spacing of the SSB is 120 kHz or 240 kHz. As a matter of course, the frequency, the SCS, the size of ssb-PositionsInBurst, and the like are not limited to these.

ssb-PositionsInBurst is a bitmap, and each bit indicates an SSB transmission candidate position in the SS burst, such as in a manner that the leftmost (first) bit corresponds to SSB index #0, the second bit corresponds to SSB index #1, and so on. The value'1' of the bit indicates that a corresponding SSB is transmitted, and '0' indicates that a corresponding SSB is not transmitted.

Note that, in the present disclosure, the SSB transmission candidate position may represent a position of the first symbol of the SSB candidate. The SSB index may indicate a position of the SSB in each given period (for example, a half frame (0.5 radio frames)) .

The SSB index may be expressed by the number of a maximum of 3 bits in Frequency Range 1 (FR1), and may be obtained by the UE by using a sequence of the DMRS of the PBCH. In Frequency Range 2 (FR2), the SSB index may be expressed by the number of a total of 6 bits including the lowest 3 bits by using a sequence of the DMRS of the PBCH and the highest 3 bits by using a payload of the PBCH, and may be obtained by the UE, based on these.

The UE may assume that the SSBs corresponding to the same SSB index of the same cell are QCLed. The UE need not assume QCL for the SSBs corresponding to different SSB indices of the same cell.

FIG. 1 shows the first, second, ..., Nth, (N+1)-th, ..., PDCCH monitoring occasions in the SI window. The UE may assume that the (x*N+K)-th (here, x = 0, 1, ..., X-1, and K = 1, 2, ..., N) PDCCH monitoring occasion corresponds to the Kth actually transmitted SSB.

Note that X may be a minimum integer having at least a value obtained by dividing the number of monitoring occasions in the SI window by N. N may correspond to the number of actually transmitted SSBs that is determined by ssb-PositionsInBurst (for example, the number of 8 or less when ssb-PositionsInBurst is 8 bits) .

The UE may assume the same quasi-co-location (QCL) regarding the PDCCH monitoring occasions related to the same SSB. For example, the UE may receive the PDCCH by assuming the same QCL as the first transmitted SSB in the first and (N+1)-th PDCCH monitoring occasions of FIG. 1. The same hatched PDCCH monitoring occasions of FIG. 1 may indicate that the same beam is applied (or QCL with the same SSB is assumed). Different hatched PDCCH monitoring occasions of FIG. 1 may indicate that beams different from each other are applied to these (or QCL with the SSBs different from each other is assumed).

Note that QCL may be an indicator indicating statistical properties of at least one of a signal and a channel (expressed as a signal/channel). For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (Spatial Rx Parameter)) is the same (at least one of these is QCL) between such a plurality of different signals/channels.

A state in which the UE assumes that a given control resource set (CORESET), channel, or reference signal is in a relationship of specific QCL (for example, QCL type D) with another CORESET, channel, or reference signal may be referred to as QCL assumption.

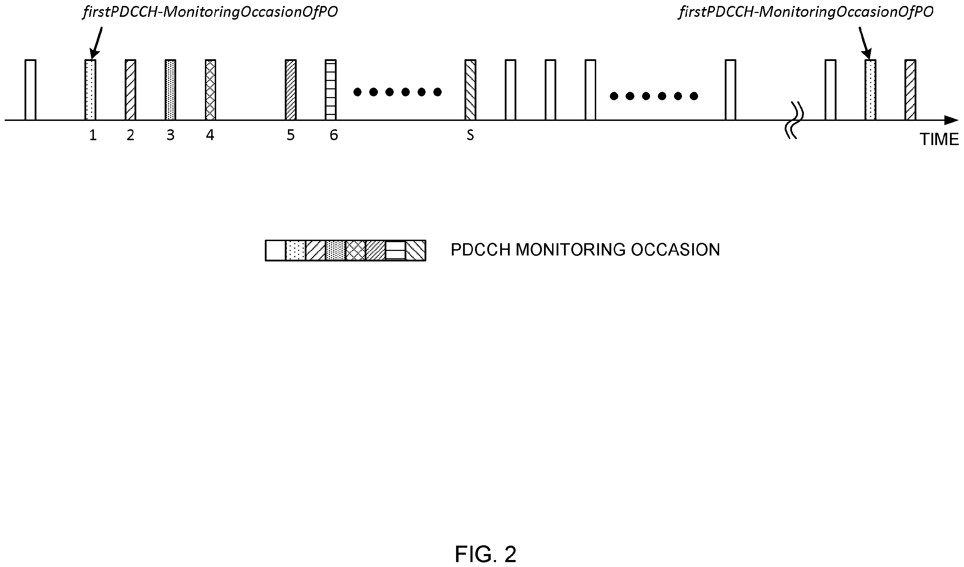

FIG. 2 is a diagram to show an example of a relationship between the PDCCH monitoring occasion for paging and the SSB according to Rel-15 NR.

The start position of PDCCH monitoring for downlink control information (DCI) for paging or a paging frame (PF) may be determined based on an ID of the UE. The PF may be defined by one or more radio frames.

For the UE, a higher layer parameter (which may be referred to as, for example, an RRC parameter "firstPDCCH-MonitoringOccasionOfPO") related to the first paging occasion (PO) in the PF may be configured. In the present disclosure, description is given by assuming that the higher layer parameter is firstPDCCH-MonitoringOccasionOfPO, but the term is not limited to this.

When firstPDCCH-MonitoringOccasionOfPO is configured for the UE, the UE may assume that a period of S PDCCH monitoring occasions from the PDCH monitoring occasion specified by firstPDCCH-MonitoringOccasionOfPO corresponds to the PO. The UE may perform PDCCH monitoring for paging in the PDCCH monitoring occasion (timing of the hatched rectangle of FIG. 2) included in the PO. Note that the unhatched rectangles of FIG. 2 may correspond to the occasions in which PDCCH monitoring for paging is not performed out of the PDCCH monitoring occasions.

FIG. 2 shows the first, second, ..., Sth PDCCH monitoring occasions in the PO. The UE may assume that the Kth PDCCH monitoring occasion of the PO corresponds to the Kth actually transmitted SSB. Here, S may correspond to the number of actually transmitted SSBs that is determined by ssb-PositionsInBurst (for example, the number of 8 or less when ssb-PositionsInBurst is 8 bits). Different hatchings of FIG. 2 may indicate that beams different from each other are applied (or QCL with the SSBs different from each other is assumed).

Note that, when the ID of the search space for the OSI or the paging is not zero and the UE is in a connected mode (CONNECTED mode), it is only necessary that the UE monitor all of configured PDCCH monitoring occasions, based on the search space configuration configured using higher layer signaling. In other words, in this case, the UE does not particularly assume the relationship between a monitoring PDCCH monitoring occasion and the SSB index.

<SSB of NR-U>

In NR-U as well, the use of the SSB has been under study. A signal in one continuous burst signal including a Channel State Information (CSI)-Reference Signal (RS), an SSB burst set (set of SSBs), and a CORESET and a PDSCH associated with the SSB has been under study. The signal may be referred to as a discovery reference signal (DRS, NR-U DRS, or the like), a reference signal for discovery, a discovery signal (DS), or the like.

The CORESET (PDCCH) associated with the SSB may be referred to as a Remaining Minimum System Information (RMSI)-CORESET, CORESET #0, or the like. The RMSI may be referred to as SIB1. The PDSCH associated with the SSB may be a PDSCH (RMSI PDSCH) for carrying the RMSI, or may be a PDSCH scheduled by using a PDCCH (DCI having a Cyclic Redundancy Check (CRC) that is scrambled with a System Information (SI)-Radio Network Temporary Identifier (RNTI)) in an RMSI-CORESET.

The SSBs having different SSB indices may be transmitted by using different beams (base station transmit beams). The SSB and the RMSI PDCCH and the RMSI PDSCH corresponding to the SSB may be transmitted by using the same beam.

Regarding NR-U, a scheme in which the transmission candidate positions of the SSBs are extended in consideration of a case in which the SSBs cannot be transmitted due to a failure of LBT has been under study. For example, a scheme in which the SSB transmission candidate positions are extended in a period (DRS transmission window) in which the DRS may be transmitted, to transmit the SSBs (beams) that cannot be transmitted due to a failure of LBT by using other transmission candidate positions in the window has been under study.

Note that the length of the DRS transmission window may be configured for the UE by using higher layer signaling, or may be defined by a specification. The DRS transmission window may be referred to as a DRS transmission period, a DRS transmission window period, or the like.

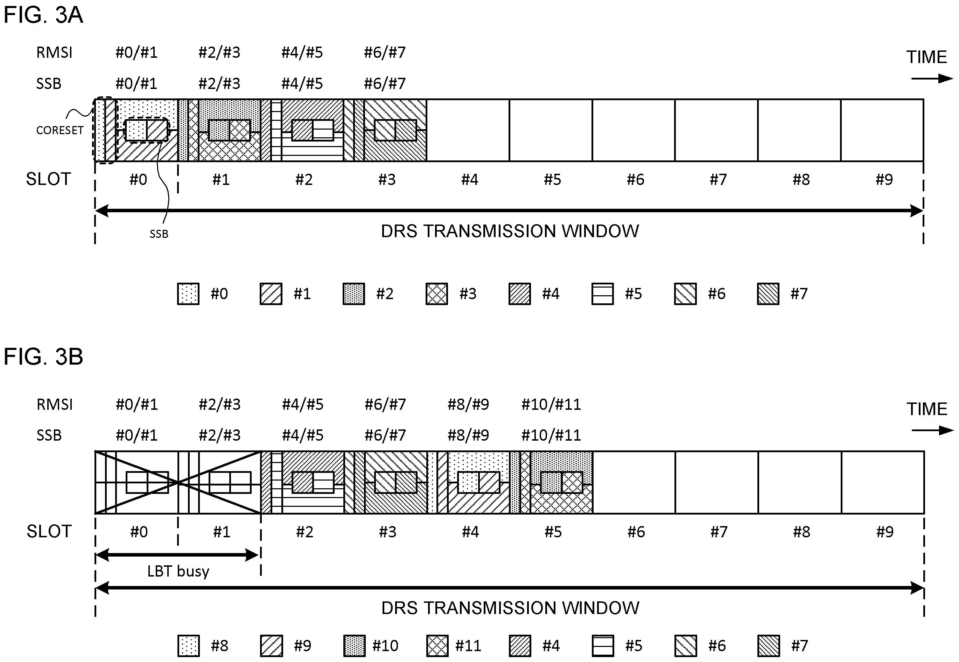

FIGS. 3A and 3B are each a diagram to show an example of extension of the SSB transmission candidate positions. In the present example, it is assumed that the SCS of the serving cell (or the SSB) is 30 kHz, and the slot length is 0.5 ms. It is assumed that the length of the DRS transmission window is 5 ms. The following figures assume a similar SCS and DRS transmission window length as well. Note that the application of the present disclosure is not limited to the SCS and the DRS transmission window length as described above.

In FIG. 3A, the DRS is transmitted over four slots (slots #0 to #3). Here, in slot #0 of FIG. 3A, the SSB, the CORESET (PDCCH) associated with the SSB, and the PDSCH (part other than the SSB and the CORESET) associated with the SSB are shown. Mapping of other slots may be similar as well. In FIG. 3A, SSB #i (i = 0 to 7) and RMSI #i (PDCCH/PDSCH) may be transmitted by using the same beam.

FIG. 3B shows a case in which slots #0 to #1 of FIG. 3A cannot be transmitted due to LBT busy (LBT failure). In this case, the UE may assume that the beam of untransmitted SSBs #0 to #3 are transmitted by respectively using SSBs #8 to #11 in a slot after SSBs #4 to #7.

In other words, in the present example, the PDCCH monitoring occasion for the RMSI is associated with the SSB index corresponding to each of the SSB candidate positions in the DRS window.

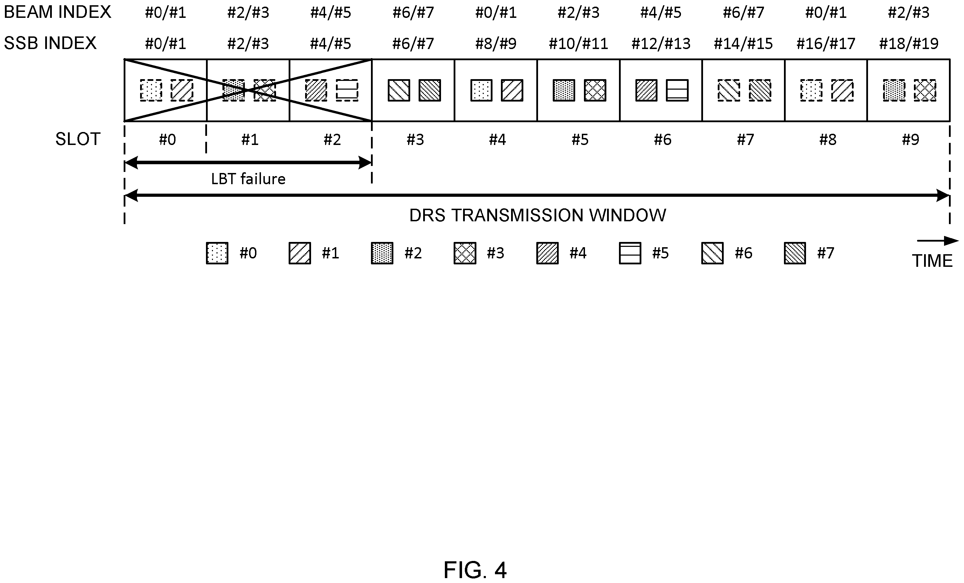

FIG. 4 is a diagram to show another example of extension of the SSB transmission candidate positions. The present example shows a case in which the number of transmission SSBs is 8, which is the same as the number of beams (the number of beams is also 8 (beam indices #0 to #7)). In this case, beam index #k corresponds to SSB index #8i+k (i = 0, 1, 2).

Incidentally, as described above, in Rel-15 NR, an actually transmitted SSB index is reported by the RRC parameter being ssb-PositionsInBurst. However, in NR-U, as shown in FIG. 3B and FIG. 4, the SSB may be transmitted at a different position (different SSB index) from the SSB candidate position that is semi-statically configured with ssb-PositionsInBurst for the UE. In addition, an actually transmitted SSB index may change depending on the DRS transmission period.

In NR-U, a scheme in which the OSI, the paging, and the like are received in an NR-U carrier in order to support stand-alone operation has also been under study. As shown in FIG. 1 and FIG. 2, in Rel-15 NR, when other than search space zero is used in the idle/inactive mode, the PDCCH monitoring occasion is determined based on the relationship with the actually transmitted SSB index. However, even when the actual transmission is performed at the SSB candidate position extended due to LBT failure, the UE determines the position of the SSB index transmitted with ssb-PositionsInBurst. The relationship between the extended SSB index that cannot be expressed with ssb-PositionsInBurst and the PDCCH monitoring period is not clear.

In Frequency Range 1 (FR1) of NR that has been under study so far, a maximum of 4 or 8 SSBs can be used. However, it is also conceivable that the number of actually transmitted SSBs is smaller than these. For example, in a case of using the QCL assumption presupposing 8 as the number of transmission SSBs as shown in FIG. 4, candidate positions (candidate resources, candidate SSB indices) of the available SSBs are limited when the number of actually transmitted SSBs is less than 8.

Regarding the SSBs of NR that has been under study so far, up to two SSBs are allocated to a slot. However, it is also conceivable that only one SSB is used for each slot for the sake of flexible control. Unless how to cope with SSB candidate indices that are not in use (for example, with which SSB index the QCL may be assumed to be satisfied) is clearly defined, operation of the base station, the UE, and the like are not clear.

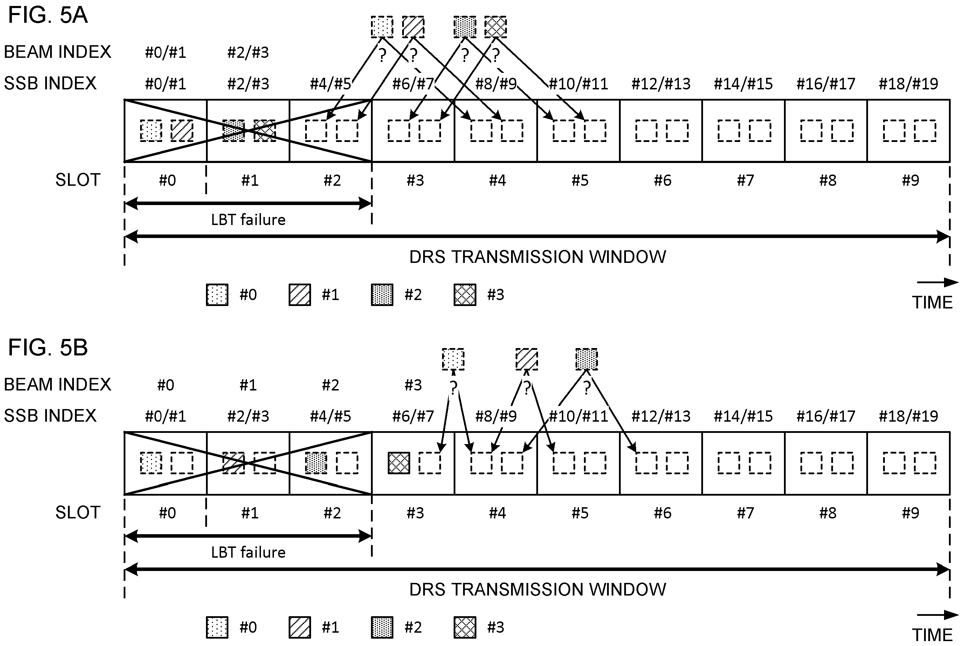

These problems will be described with reference to FIGS. 5A and 5B. FIGS. 5A and 5B are each a diagram to show an example of a problem of QCL assumption of the SSB.

FIG. 5A corresponds to a case in which the number of SSBs (number of beams) is less than 8. In the present example, ssb-PositionsInBurst indicates SSB indices #0 to #3, and beam indices #0 to #3 correspond to SSB indices #0 to #3.

In the present example, slots #0 to #2 are not transmitted due to a failure of LBT. At which SSB transmission candidate positions beam indices #0 to #3 corresponding to SSB indices #0 to #3 that ought to have been transmitted in slots #0 and #1 are transmitted presents a problem. When a fixed relationship corresponding to the number of SSBs being 8 as shown in FIG. 4 is used, beam indices #0 to #3 correspond to SSB indices #8 to #11, but SSB indices #4 to #7 cannot be used. It is required to define the QCL assumption that allows unwasteful use of available candidate SSB indices.

FIG. 5B corresponds to a case in which the number of SSBs (number of beams) per slot is 1. In the present example, ssb-PositionsInBurst indicates SSB indices #0, #2, #4, and #6, and beam indices #0 to #3 respectively correspond to SSB indices #0, #2, #4, and #6.

In the present example, slots #0 to #2 are not transmitted due to a failure of LBT. At which SSB transmission candidate positions beam indices #0 to #2 corresponding to SSB indices #0, #2, and #4 that ought to have been transmitted in slots #0 to #2 are transmitted presents a problem. It is conceivable to transmission beam indices #0 to #2 by respectively using SSB indices #7 to #9 immediately after SSB index #6, or it is conceivable to transmission beam indices #0 to #2 by using SSB indices #8, #10, and #12 as to maintain the number of SSBs per slot to be 1. In the specifications that have been under study so far, which is employed cannot be specified.

In this manner, a scheme in which the UE preferably determines the QCL assumption between the SSB indices in consideration of an LBT failure in a case where semi-statically transmitted SSBs are reported by using ssb-PositionsInBurst has not been sufficiently studied. A scheme in which the UE preferably determines the QCL assumption between the SSB indices in consideration of an LBT failure when ssb-PositionsInBurst cannot be used has not been sufficiently studied as well. Unless these are clearly defined, monitoring of the PDCCH cannot be preferably performed, for example, which may result in deterioration of communication throughput.

In view of this, the inventors of the present invention came up with the idea of a method of clarifying QCL assumption between the SSB indices (SSB transmission candidate positions) in the NR-U carrier to implement operation with appropriate use of the SSBs even when the SSB indices (positions) transmitted with a given beam change according to LBT results.

Embodiments according to the present disclosure will be described in detail below with reference to the drawings. The radio communication method according to each embodiment may be employed independently or may be employed in combination.

Note that, in the present disclosure, an SSB corresponding to an SSB index is also simply referred to as an SSB index. A beam corresponding to a beam index is also simply referred to as a beam index.

Note that the beam index may correspond to a set of SSB indices available for QCL assumption in the DRS transmission window. Thus, the beam index may be interpreted as an effective SSB index. In contrast, the SSB index that simply indicates the SSB candidate position in the DRS transmission window may be interpreted as an SSB location index, a location index, or the like.

NR-U according to the present disclosure is not limited to LAA, and may include a case in which the unlicensed band is used in stand-alone.

### (Radio Communication Method)

### <First Embodiment>

In an embodiment, the QCL assumption between the SSB indices in the NR-U carrier may be determined by a specification and higher layer signaling. For example, the UE may assume that the SSB indices up to a slot including the SSB corresponding to the maximum SSB index indicated by a given higher layer parameter (for example, ssb-PositionsInBurst) are QCLed with the SSBs corresponding to the SSB indices of slots following the slot according to the order.

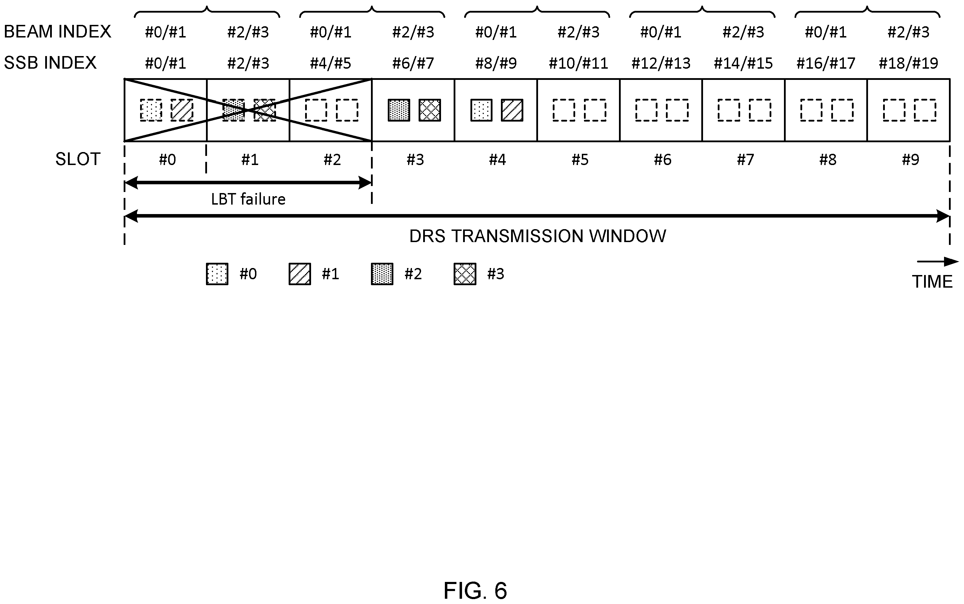

FIG. 6 is a diagram to show an example of the QCL assumption between the SSB indices according to an embodiment. The present example shows a case in which ssb-PositionsInBurst indicates SSB indices #0 to #3, in other words, the maximum SSB index indicated by ssb-PositionsInBurst is 3.

In this case, beam indices #0 to #3 correspond to SSB indices #0 to #3. The UE may assume that SSB indices #4i to #4i+3 (i is a natural number) are respectively QCLed with SSB indices #0 to #3. In other words, in the present example, the maximum SSB index indicated by ssb-PositionsInBurst corresponds to the last SSB in a certain slot, and repetition of the beam is thus separated by the slot, which is thus preferable for control.

In the present example, slots #0 to #2 are not transmitted due to a failure of LBT. Beam indices #0 to #3 corresponding to SSB indices #0 to #3 that ought to have been transmitted in slots #0 and #1 may be transmitted in slots #3 and #4 (SSB indices #6 to #9) in the same DRS transmission window.

The UE may assume that SSB indices #6, #7, #8, and #9 are respectively QCLed with SSB indices #2, #3, #0, and #1. In other words, the UE may assume that SSB indices #6, #7, #8, and #9 are transmitted by respectively using beam indices #2, #3, #0, and #1.

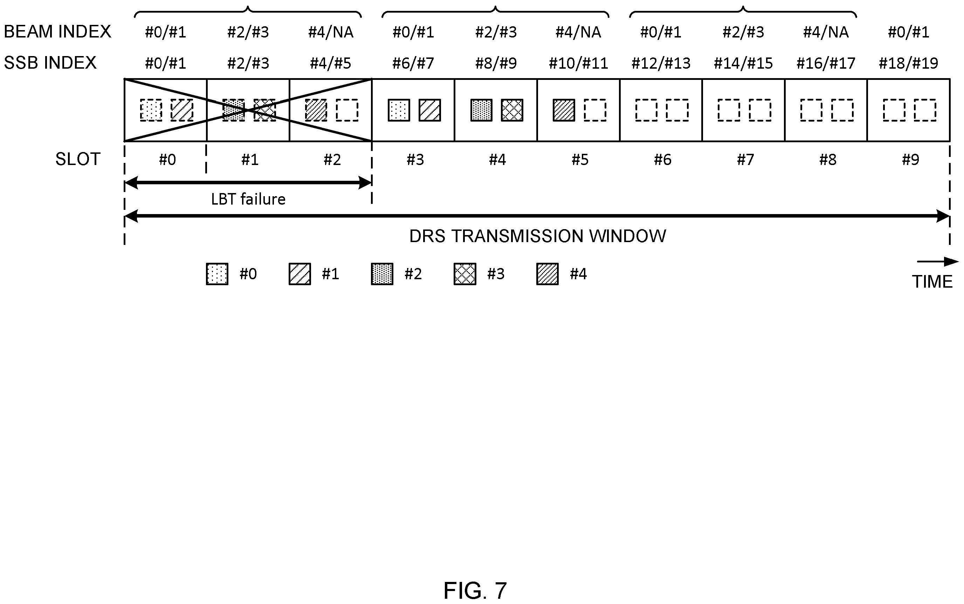

FIG. 7 is a diagram to show another example of the QCL assumption between the SSB indices according to an embodiment. The present example shows a case in which ssb-PositionsInBurst indicates SSB indices #0 to #4, in other words, the maximum SSB index indicated by ssb-PositionsInBurst is 4.

In this case, beam indices #0 to #4 correspond to SSB indices #0 to #4. The UE may assume that SSB index #5 included in the same slot as SSB index #4 being the maximum SSB index indicated by ssb-PositionsInBurst is ineffective (Not Available/Not Applicable (NA)), and need not count SSB index #5 as the actually transmitted number of SSBs.

The UE may assume that SSB indices #6i to #6i+4 (i is a natural number) are respectively QCLed with SSB indices #0 to #4. The UE may assume that SSB index #6i+5 is NA, similarly to SSB index #5. In other words, in the present example, repetition of the beam can be separated by the slot even when the maximum SSB index indicated by ssb-PositionsInBurst is not the last SSB in a certain slot, which is thus preferable for control.

In the present example, slots #0 to #2 are not transmitted due to a failure of LBT. Beam indices #0 to #4 corresponding to SSB indices #0 to #4 that ought to have been transmitted in slots #0 to #2 may be transmitted in slots #3 to #5 (SSB indices #6 to #10) in the same DRS transmission window.

The UE may assume that SSB indices #6, #7, #8, #9, and #10 are respectively QCLed with SSB indices #0, #1, #2, #3, and #4. In other words, the UE may assume that SSB indices #6, #7, #8, #9, and #10 are transmitted by respectively using beam indices #0, #1, #2, #3, and #4.

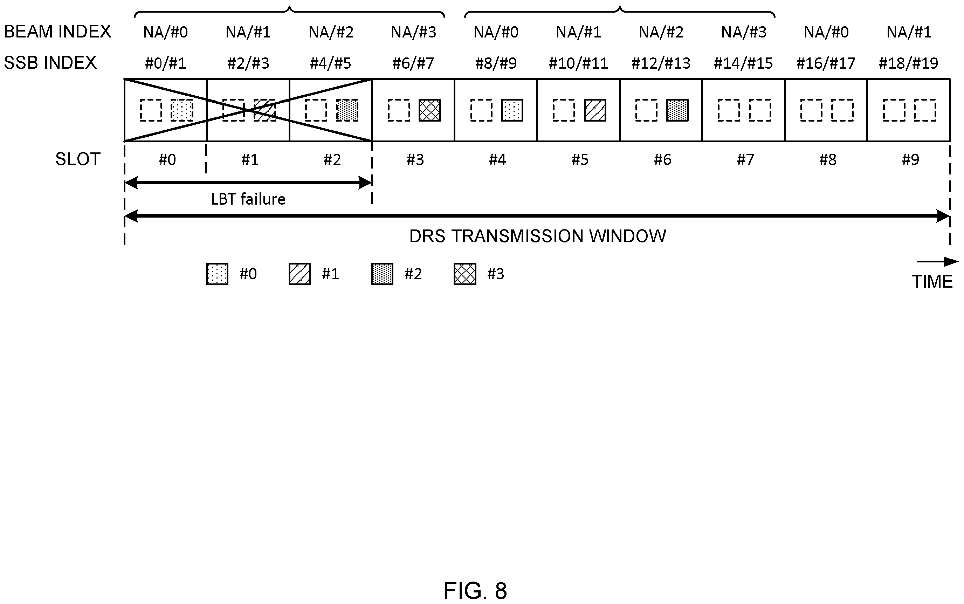

FIG. 8 is a diagram to show yet another example of the QCL assumption between the SSB indices according to an embodiment. The present example shows a case in which ssb-PositionsInBurst indicates SSB indices #1, #3, #5, and #7, in other words, the maximum SSB index indicated by ssb-PositionsInBurst is 7.

In this case, beam indices #0, #1, #2, and #3 respectively correspond to SSB indices #1, #3, #5, and #7. The UE may assume that off (corresponding to '0') SSB indices #0, #2, #4, and #6 out of up to SSB index #7 being the maximum SSB index indicated by ssb-PositionsInBurst are ineffective (NA), and need not count off (corresponding to '0') SSB indices #0, #2, #4, and #6 as the actually transmitted number of SSBs.

The UE may assume that SSB indices #8i+1, #8i+3, #8i+5, and #8i+7 are respectively QCLed with SSB indices #1, #3, #5, and #7. The UE may assume that SSB indices #8i, #8i+2, #8i+4, and #8i+6 are NA, similarly to SSB indices #0, #2, #4, and #6. In other words, in the present example, any SSB index can be prevented from being considered to be QCLed with an NA SSB index.

In the present example, slots #0 to #2 are not transmitted due to a failure of LBT. SSB index #7 of slot #3 is transmitted by using beam index #3. Beam indices #0, #1, and #2 corresponding to SSB indices #1, #3, and #5 that ought to have been transmitted in slots #0 to #2 may be transmitted in slots #4 to #6 (SSB indices #9, #11, and #13) in the same DRS transmission window.

The UE may assume that SSB indices #9, #11, and #13 are respectively QCLed with SSB indices #1, #3, and #5. In other words, the UE may assume that SSB indices #7, #9, #11, and #13 are transmitted by respectively using beam indices #3, #0, #1, and #2.

Note that, in an embodiment, the UE may assume that the SSB indices up to a given period (for example, at least one of a subframe, a half slot, a symbol, and the like) including the SSB corresponding to the maximum SSB index indicated by ssb-PositionsInBurst are QCLed with the SSBs corresponding to the SSB indices following the given period according to the order.

Note that, in an embodiment, the SSB transmission candidate positions in the NR-U carrier may be present in all of the slots in a given period (for example, a half frame having a length of 5 ms). Regarding the SSB transmission candidate positions, candidate positions may be defined over the given period (for example, up to a period corresponding to 6 ms).

For example, when the period of the DRS transmission window can be configured for the UE by using higher layer signaling, the SSB transmission candidate positions and the SSB indices may be defined for all of the slots in the period of the configured DRS transmission window.

Here, regarding the SSB transmission candidate positions in the slot, at least one of cases A, B, C, D, and E defined in TS 38.213 §4.1 Cell search according to 3GPP Rel-15 may be used based on the SCS, or other candidate positions may be used.

Note that case A and case C may correspond to cases in which two SSBs in one slot are not contiguous (are separated away) in the time domain. Case A may be used for a 15 kHz SCS. Case C may be used for a 30 kHz SCS. Case B may correspond to a case in which two SSBs in one slot are contiguous in the time domain. Case B may be used for a 30 kHz SCS.

Note that, regarding the 30 kHz SCS, a case to be used (for example, at least one of cases B and C) may be defined in a specification, or may be reported by using higher layer signaling, physical layer signaling, or a combination of these.

A part of the SSB transmission candidate positions may be ineffective. For example, as shown in FIG. 7 and FIG. 8, in ssb-PositionsInBurst, a skipped SSB index (in other words, an SSB index corresponding to a bit corresponding to '0' and a bit having subsequent bits being '1') and an SSB index QCLed with the skipped SSB index may be assumed to be ineffective. In ssb-PositionsInBurst, an SSB index corresponding to a bit corresponding to '0' and in the same slot as the maximum SSB index and an SSB index QCLed with the SSB index may be assumed to be ineffective.

In an embodiment, in the monitoring operation of the PDCCH for paging in the NR-U carrier, the PO may include as many PDCCH monitoring occasions as the number of all of effective SSB transmission candidate positions. In other words, the number S of PDCCH monitoring occasions in the PO described above in relation to FIG. 2 may be interpreted as the number of the effective SSB transmission candidate positions.

Here, the effective SSB transmission candidate positions may be SSB indices indicated as to be transmitted by ssb-PositionsInBurst and SSB indices that are assumed to be QCLed with these SSB indices included in the DRS transmission window.

In other words, the number of the effective SSB transmission candidate positions may be a total number of the number of the SSB indices indicated as to be transmitted by ssb-PositionsInBurst and the number of the SSB indices that are assumed to be QCLed with these SSB indices included in the DRS transmission window.

Description will be given by taking FIG. 7 as an example. In the case of FIG. 7, the number of the SSB indices indicated as to be transmitted by ssb-PositionsInBurst is 5, specifically, SSB indices #0 to #4. The number of the SSB indices that are QCLed with SSB indices #0 to #4 in the DRS transmission window is 12, specifically, SSB indices #6 to #10, #12 to #16, and #18 to #19. Accordingly, the number of the effective SSB transmission candidate positions (effective SSB indices) is 17.

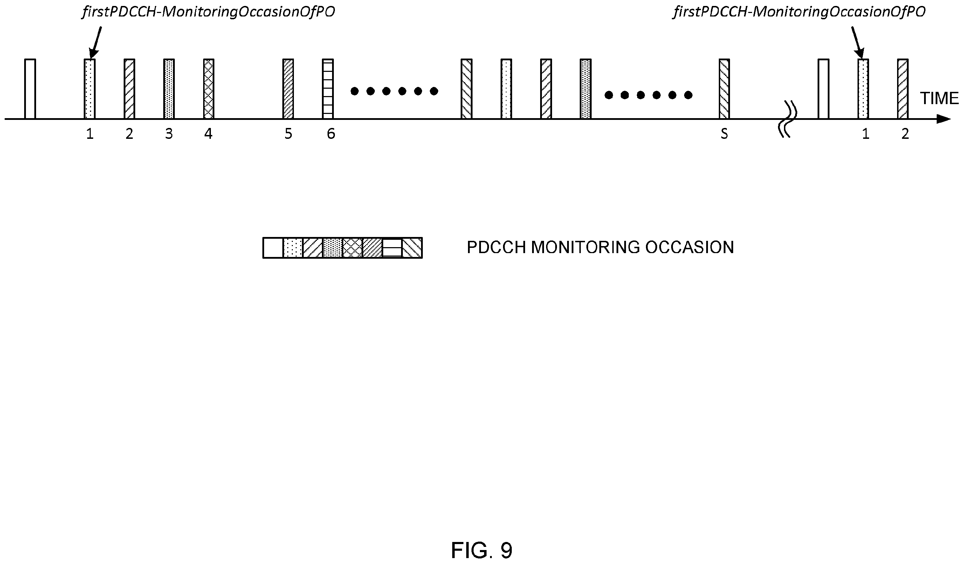

FIG. 9 is a diagram to show an example of a relationship between the PDCCH monitoring occasion for paging and the SSB according to an embodiment. FIG. 2 and FIG. 9 are different in the following respect: in FIG. 2, S PDCCH monitoring occasions correspond to beams different from each other, whereas in FIG. 9, PDCCH monitoring occasions corresponding to the same beam (based on the same QCL assumption) are included in S PDCCH monitoring occasions.

According to an embodiment described in the above, the QCL assumption between the SSB indices can be appropriately determined.

### <Second Embodiment>

ssb-PositionsInBurst described above is reported to the UE by using SIB1 or RRC signaling. Thus, when ssb-PositionsInBurst cannot be used (for example, in a case of initial access), assumption of QCL related to different SSB candidate positions is difficult with the method described above.

A scheme in which when 8 or more is supported as the number of SSB candidate positions (or in a cell in which 8 or more is used), the UE obtains indices specific to the SSB candidate positions as SSB indices by using a combination of the DMRS (or a DMRS sequence) and a payload of the PBCH has been under study.

In the specification of NR that has been under study so far, when the UE measures and reports power or quality (for example, Synchronization Signal Reference Signal Received Power (SS-RSRP)) and the like of neighboring cells in Radio Resource Management (RRM) measurement, the UE is required to obtain the SSB indices of respective neighboring cells. With a UE load, a measurement delay, and the like being taken into consideration, it is preferable that decoding a PBCH payload of each neighboring cell to obtain the SSB index be avoided to the extent possible.

The inventors of the present invention focused on that what is actually important regarding an RRM measurement report of neighboring cells is to recognize the beam indices (effective SSB indices) of the SSBs of the neighboring cell, and that to know timing information of the neighboring cells is not necessarily required.

In view of this, in an embodiment, the UE obtains effective SSB indices, based on a sequence of the DMRS of the PBCH. For example, the sequence of the DMRS of the PBCH may be generated based on the effective SSB indices. In this manner, the effective SSB indices can be identified based only on the DMRS, and thus the UE can omit decoding of the PBCH.

In other words, regarding a detected given cell and a neighboring cell having the same frequency as the given cell, the UE may obtain the effective SSB indices without obtaining the SSB indices, and thereby perform at least one of identification of the cell and RRM measurement.

The UE may use the effective SSB indices as the SSB indices (location indices) in a case of the measurement report of power or quality of the neighboring cells in the RRM measurement.

The maximum number of the effective SSB indices may be a given number (for example, 8). In other words, the maximum value of the effective SSB index may be a value that is obtained by subtracting 1 from the given number (for example, 8 - 1 = 7). The maximum number of the effective SSB indices may be defined by a specification, or may be reported by using higher layer signaling or the like.

The UE may assume that the same effective SSB index is used in different SSB candidate positions (location indices) in the DRS transmission window.

The payload of the PBCH transmitted in the DRS transmission window may include at least one of the following (1) and (2):
(1) Information as to in what every number of SSB candidate positions (location indices) the same effective SSB index is repeated, and
(2) Information for deriving half frame timing of a cell.

Information of (1) above may be referred to as, for example, information of the maximum number of the effective SSB indices, information of the periodicity of the effective SSB indices, information of a unit of wrap around (or wrapping around), information of a repeated transmission unit of the SSB, or the like. Note that "wrap around" may mean that the index such as the effective SSB index returns to 0 after reaching its maximum value. The following description will be given on the assumption that the information of (1) above is the information of a unit of wrap around, but this is not restrictive.

The information of (2) above may be referred to as, for example, information related to the location index of the SSB detected in the DRS transmission window, information for identifying which ordinal number of the SSB of the same effective SSB index in the DRS transmission window that the detected SSB corresponds to, information for identifying the location index from the effective SSB index, timing related information, timing information, or the like. The following description will be given on the assumption that the information of (2) above is the timing information, but this is not restrictive.

The UE may identify (determine) the location index corresponding to the effective SSB index in the DRS transmission window regarding the detected cell and the neighboring cell having the same frequency (cell with at least the same operator), based on the information of a unit of wrap around.

The UE may identify (determine) the half frame timing of the detected cell and the neighboring cell having the same frequency, based on the timing information. Note that the half frame timing may be interpreted as at least one of frame timing, slot timing, and the like.

It is desirable that the unit of wrap around be the same in one DRS transmission window. The ordinal number of the SSB of the same effective SSB index in the DRS transmission window that the detected SSB corresponds to is different depending on the location index.

With these being taken into consideration, the information of a unit of wrap around may be reported to the UE by being included in the MIB of the payload of the PBCH. The timing information may be reported to the UE as information other than the MIB of the payload of the PBCH.

By constituting each piece of the information in this manner, contents of the MIB of the PBCH are the same although a part other than the MIB of the PBCH changes in a PBCH transmission period (PBCH Transmission Time Interval (PBCH TTI)). Thus, the UE can synthetically receive the part of the MIB in the PBCH transmission period, and can enhance received quality of the MIB. Note that the PBCH TTI may be, for example, 40 ms, 80 ms, or the like.

Note that the information of a unit of wrap around may be reported to the UE by being included in an RRC information element other than the MIB of the payload of the PBCH. The timing information may be reported to the UE as information other than the MIB and the RRC information element including the information of a unit of wrap around of the payload of the PBCH. In this case as well, the UE can synthetically receive the part of the MIB and the RRC information element including the information of a unit of wrap around in the PBCH transmission period.

The information of a unit of wrap around may be reported to the UE by using not only the MIB but also at least one of the SIB (for example, SIB1), RRC signaling, and the like.

When the UE supports stand-alone of NR-U, the UE may assume a given value defined in a specification as the unit of wrap around in initial access. This is because it is preferable to be able to perform processing by assuming that the maximum number of the effective SSB indices is a given value when the UE derives the effective SSB index (in other words, a pattern of the DMRS of the PBCH) across a boundary of transmission periodicity of the DRS or transmission boundary of the SSB by means of synthetic reception.

Note that, in the present disclosure, the UE may assume that the SSB index reported by using ssb-PositionsInBurst means the effective SSB index.

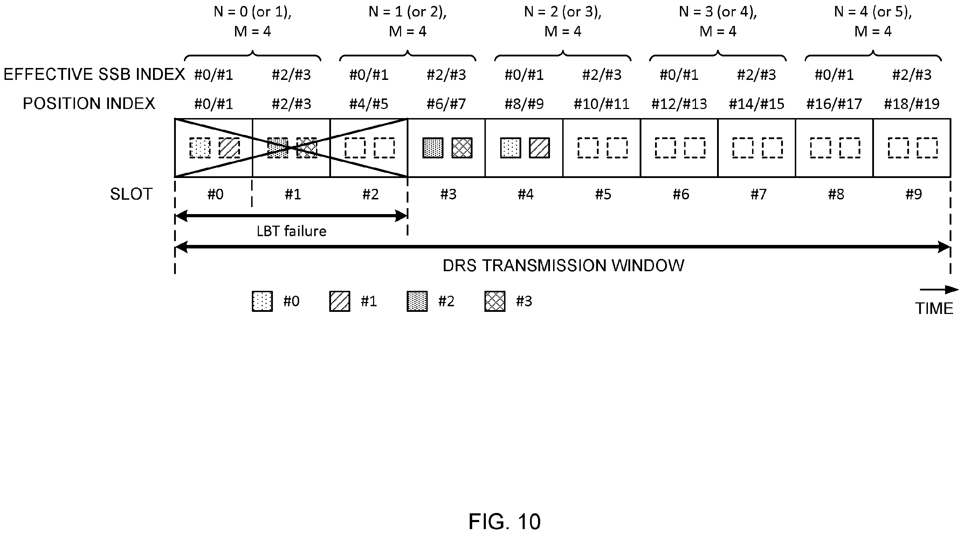

FIG. 10 is a diagram to show an example of the QCL assumption between the SSB indices according to an embodiment. The present example corresponds to a case in which ssb-PositionsInBurst indicates effective SSB indices #0 to #3. FIG. 10 corresponds to an example in which the beam index of FIG. 6 is interpreted as the effective SSB index, and the SSB index is interpreted as the location index, and thus overlapping description is not repeated.

FIG. 10 shows an example in which the unit of wrap around (represented by M) is 4, and the timing information (represented by N) is 0 to 4 or 1 to 5. The timing information may represent the SSB corresponding to the first SSB candidate position in the DRS transmission window regarding a certain effective SSB index by using '0' or by using '1'. In other words, the timing information may be a number starting with 0, or may be a number starting with 1. Note that M may be expressed with a slot number, and may be expressed with slot number = 2 in the case of FIG. 10.

The timing information indicates the ordinal number of the candidate position in the DRS transmission window that the same effective SSB index corresponds to. For example, in FIG. 10, the location index corresponding to timing information = i (i = 0 to 4) may correspond to #Mi, #Mi+1, ..., #Mi+(M-1).

The UE may assume that location indices #6, #7, #8, and #9 respectively correspond to effective SSB indices #2, #3, #0, and #1. In other words, the UE may assume that the SSBs of location indices #6, #7, #8, and #9 are respectively QCLed with the SSBs of location indices #2, #3, #0, and #1.

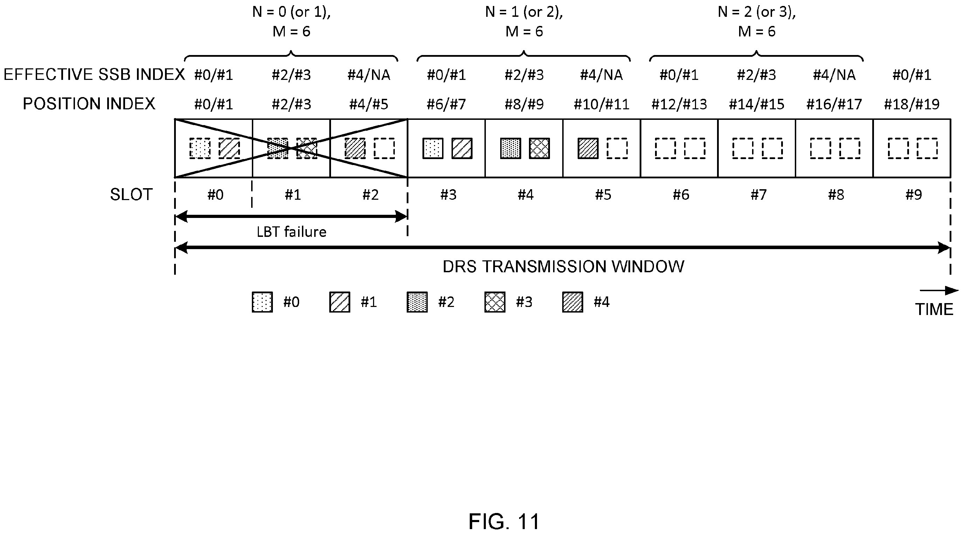

FIG. 11 is a diagram to show another example of the QCL assumption between the SSB indices according to an embodiment. The present example corresponds to a case in which ssb-PositionsInBurst indicates effective SSB indices #0 to #4. FIG. 11 corresponds to an example in which the beam indices of FIG. 7 are interpreted as the effective SSB indices, and the SSB indices are interpreted as the location indices, and thus overlapping description is not repeated.

FIG. 11 shows an example in which the unit of wrap around (represented by M) is 6, and the timing information (represented by N) is 0 to 2 or 1 to 3. Note that M may be expressed with a slot number, and may be expressed with slot number = 3 in the case of FIG. 11. In FIG. 11, the location index corresponding to timing information = i (i = 0 to 2) may correspond to #Mi, #Mi+1, ..., #Mi+(M-1).

Note that the effective SSB index may be NA. In FIG. 11, the UE may assume that the effective SSB index corresponding to location index #5 is ineffective (NA). The UE may assume that any location index in the DRS transmission window corresponding to the NA effective SSB index is also similarly NA.

The UE may assume that location indices #6, #7, #8, #9, and #10 respectively correspond to effective SSB indices #0, #1, #2, #3, and #4. In other words, the UE may assume that the SSBs of location indices #6, #7, #8, #9, and #10 are respectively QCLed with the SSBs of location indices #0, #1, #2, #3, and #4.

According to an embodiment described in the above, the QCL assumption between the SSB indices can be appropriately determined. Even in a case where the cells are asynchronous with each other, decoding of the PBCH can be prevented in neighboring cell measurement and the like.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

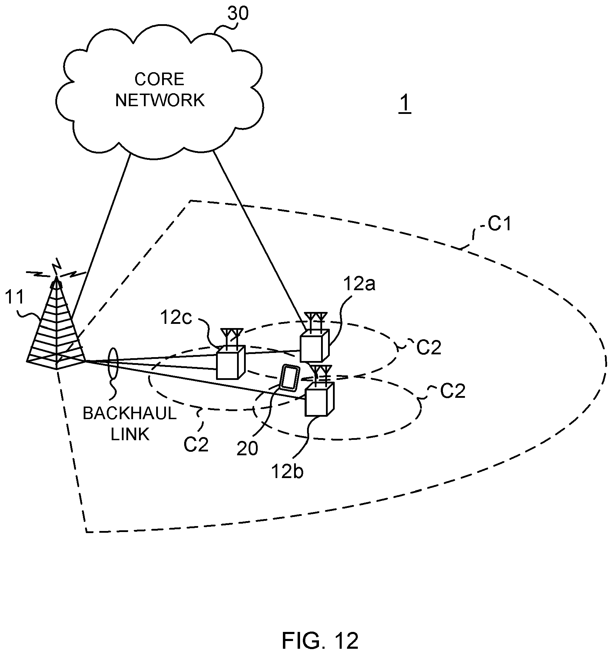

FIG. 12 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node".

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform". Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set". Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link". In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal".

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)".

### (Base Station)

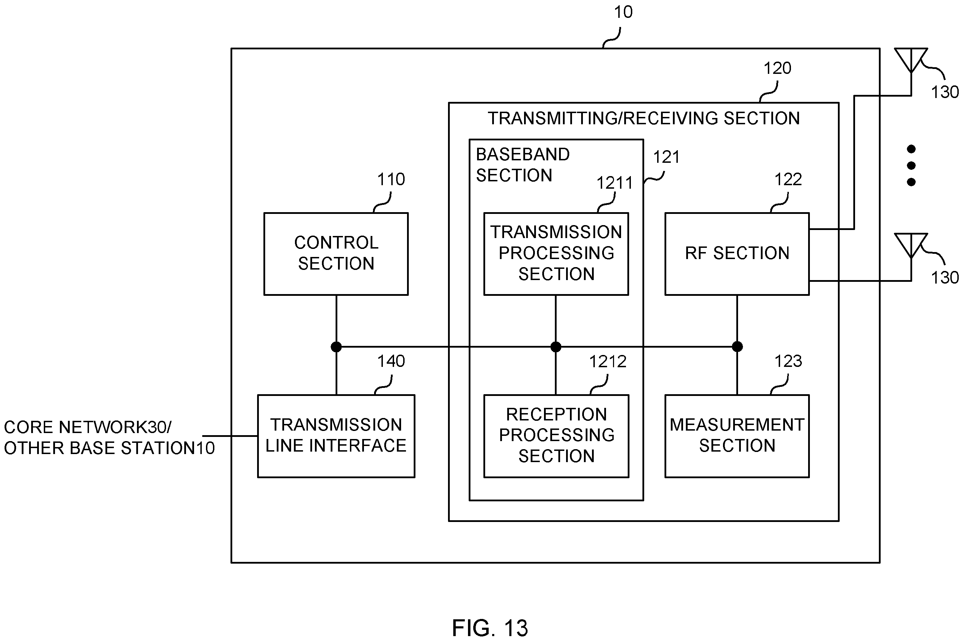

FIG. 13 is a diagram to show an example of a structure of the base station according to one embodiment. The base station 10 includes a control section 110, a transmitting/receiving section 120, transmitting/receiving antennas 130 and a transmission line interface (transmission line interface) 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit information (for example, the higher layer parameter "ssb-PositionsInBurst") related to the position of the synchronization signal block (SSB) in the synchronization signal (SS) burst to the user terminal 20.

The transmitting/receiving section 120 may transmit the SSB, the DRS, and the like.

### (User Terminal)

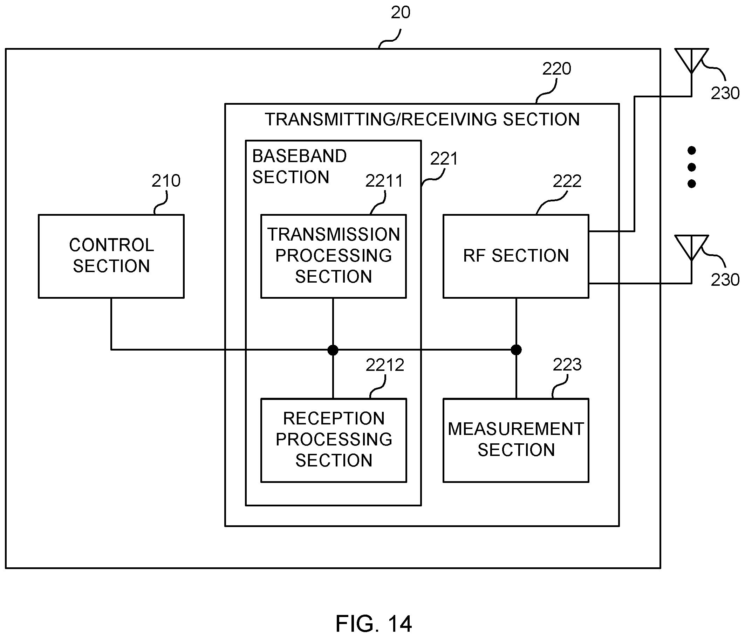

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be constituted as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (the RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (the RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (the measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive information (for example, the higher layer parameter "ssb-PositionsInBurst") related to the position of the synchronization signal block (SSB) in the synchronization signal (SS) burst. The information may be, for example, reported by using at least one of System Information Block 1 (SIB1) and RRC signaling.

The control section 210 may determine Quasi-Co-Location (QCL) assumption between the SSB indices in the transmission window of the discovery reference signal (DRS) in a carrier to which listening is applied (for example, the unlicensed carrier), based on the information related to the position of the SSB in the SS burst.

Note that the carrier to which listening is applied may be referred to as an LAA cell, an LAA secondary cell (LAA SCell), or the like. In the carrier to which listening is applied, the user terminal 20 may perform listening before transmission. Here, "listening" according to the present disclosure may be interpreted as at least one of Listen Before Talk (LBT), Clear Channel Assessment (CCA), carrier sense, sensing, sensing of a channel, channel access operation, and the like.

The control section 210 may assume that the SSBs corresponding to the SSB indices up to a slot including the SSB corresponding to the maximum SSB index reported through the information related to the position of the SSB in the SS burst is QCLed with the SSBs corresponding to the SSB indices of slots following the slot according to the order.

The control section 210 may assume that the QCL assumption of the SSB index is repeatedly used in a period unit from the first slot of ssb-PositionsInBurst to the slot including the SSB corresponding to the maximum SSB index in the DRS transmission window. For example, the control section 210 may assume that QCL assumption in the period unit is applied again from the slot following slot including the SSB corresponding to the maximum SSB index.

The control section 210 may consider that the SSB indices larger than the maximum SSB index are ineffective (need not count the SSB indices as the actually transmitted number of SSBs) in the slot including the SSB corresponding to the maximum SSB index.

The control section 210 may assume that the number of Physical Downlink Control Channel (PDCCH) monitoring occasions for paging included in the paging occasion in the carrier to which listening is applied is determined based on the sum of the number of one or more transmitted SSB indices reported through the information related to the position of the SSB in the SS burst and the number of SSB indices that is QCLed with the one or more transmitted SSB indices.

The control section 210 may determine the QCL assumption between the PDCCH and the SSB in the PDCCH monitoring occasion for receiving at least one of other system information (OSI) and paging, based on various QCL assumptions, and may monitor (or receive) the PDCCH. Note that the OSI, the paging, and the like may be interpreted as other information (for example, a specific DCI format).

The transmitting/receiving section 220 may receive (or detect) an SSB. The control section 210 may acquire an effective SSB index, based on a DMRS of a PBCH included in the SSB. In this case, the control section 210 may omit the acquisition of the SSB index regarding the SSB, or may omit (need not perform) decoding of the PBCH, for example.

The control section 210 may obtain, from a payload of the PBCH, at least one of information of a maximum number of the effective SSB index (which may be referred to as information of a unit of wrap around), and information for identifying which ordinal number of the SSB of a same effective SSB index in a DRS transmission window the SSB corresponds to (which may be referred to as timing information).

The information of the maximum number of the effective SSB index may be included in an MIB of the payload of the PBCH, and the information for identifying which ordinal number of the SSB of the same effective SSB index in the DRS transmission window the SSB corresponds to may be included in an information element other than the MIB of the payload of the PBCH.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

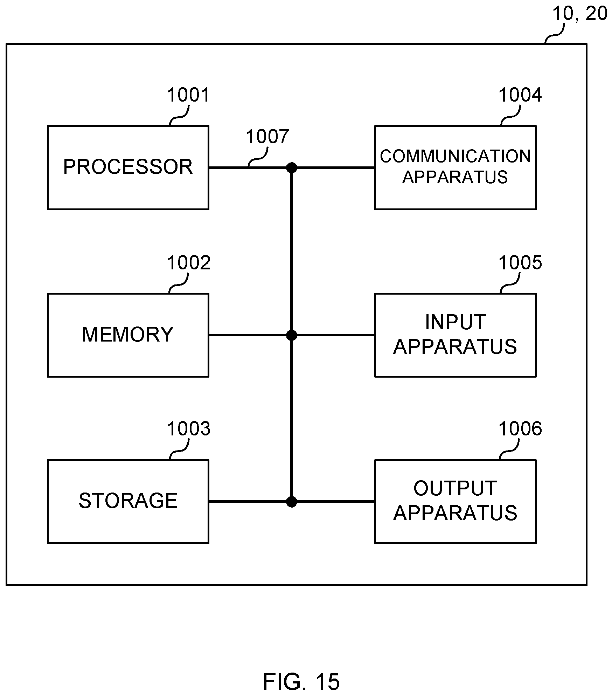

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus".

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages". A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI". That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe".

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". Note that the phrase may mean that "A and B is each different from C". The terms "separate," "be coupled," and so on may be interpreted similarly to "different".

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on JP 2019-022056, filed on January 23, 2019, the contents of which are incorporated herein in its entirety.

## Claims

1. A user terminal comprising:
a receiving section that receives a synchronization signal block (SSB); and
a control section that obtains an effective SSB index, based on a demodulation reference signal (DMRS) of a broadcast channel (Physical Broadcast Channel (PBCH)) included in the SSB.

2. The user terminal according to claim 1, wherein
the control section obtains, from a payload of the PBCH, at least one of information of a maximum number of the effective SSB index, and information for identifying which ordinal number of the SSB of a same effective SSB index in a discovery reference signal (DRS) transmission window the SSB corresponds to.

3. The user terminal according to claim 2, wherein
the information of the maximum number of the effective SSB index is included in a master information block (MIB) of the payload of the PBCH, and the information for identifying which ordinal number of the SSB of the same effective SSB index in the DRS transmission window the SSB corresponds to is included in an information element other than the MIB of the payload of the PBCH.

4. A radio communication method for a user terminal, comprising the steps of:
receiving a synchronization signal block (SSB); and obtaining an effective SSB index, based on a demodulation reference signal (DMRS) of a broadcast channel (Physical Broadcast Channel (PBCH)) included in the SSB.
